# FASCICULE DE BREVET EUROPEEN

(11) **EP 2 747 876 B1**
(45) Date de publication et mention de la délivrance du brevet: **09.11.2016**
(21) Numéro de dépôt: 12756783.2
(22) Date de dépôt: 22.08.2012
(51) Int. Cl.: B01D 53/34, B01D 53/48, C01B 17/04, B01D 53/52

(54) **COMBUSTION ETAGEE D'EFFLUENTS COMBUSTIBLES SOUFRES AVEC RECUPERATION DU SOUFRE DANS LE PROCEDE CLAUS**
STUFENWEISE VERBRENNUNG VON BRENNBAREN SCHWEFELHALTIGEN ABFLÜSSEN MIT RÜCKGEWINNUNG VON SCHWEFEL IM CLAUSVERFAHREN
STAGED COMBUSTION OF COMBUSTIBLE SULPHUR-CONTAINING EFFLUENTS WITH RECOVERY OF THE SULPHUR IN THE CLAUS PROCESS

(30) Priorité: 26.08.2011 FR 1157577
(43) Date de publication de la demande: 02.07.2014
(73) Titulaire: Total SA, 92400 Courbevoie (FR)
(72) Inventeur: NOUGAYREDE, Jean, F-64000 Pau (FR); MAKTOUF, Soufiene, 92800 Puteaux (FR)
(74) Mandataire: Cabinet Plasseraud
(86) Numéro de dépôt international: PCT/FR2012/051919
(87) Numéro de publication internationale: WO 2013/030494

(56) Documents cités:
- GB-A- 2 187 444
- GB-A- 2 187 445
- US-A- 5 139 765
- US-A- 5 508 013
- US-A1- 2008 247 927

## Description

### DOMAINE TECHNIQUE DE L'INVENTION

La présente invention appartient au domaine de l'exploration et de la production pétrolière. Elle concerne un procédé de traitement d'effluents combustibles soufrés.

### ART ANTERIEUR

La gestion des gaz acides est un problème récurrent dans le domaine de la production pétrolière et gazière. Les gaz acides sont des gaz riches en sulfure d'hydrogène (H₂S) et/ou en dioxyde de carbone (CO₂) et/ou autres composés soufrés. Le plus souvent associés aux hydrocarbures naturels liquides ou gazeux, ils sont obtenus par désulfuration de ces hydrocarbures dans les raffineries de pétrole et les usines de gaz naturels. Ce traitement d'extraction des gaz acides est impératif pour rendre les hydrocarbures propres à la consommation en tant que combustibles (essences, fuels, gaz domestiques et industriels...).

La présence de H₂S dans des gaz d'hydrocarbures provoque la corrosion des matériaux qui constituent les unités de récupération et de stockage des produits pétroliers. Il est donc nécessaire d'utiliser des matériaux suffisamment résistants et très coûteux.

Les émissions de H₂S soulèvent aussi des problèmes au niveau environnemental et au niveau de la santé des hommes présents sur les sites d'extraction pétrolière car il s'agit d'un produit toxique létal. La quantité d'H₂S libérée dans l'atmosphère est limitée par des normes. Si le puits pétrolier génère davantage de gaz acides que ce que les normes autorisent, il est nécessaire de mettre en place des unités de captage et/ou de traitement en tête des puits d'extraction.

Une solution technique connue de traitement des gaz acides est le procédé Claus. Le procédé Claus permet de récupérer du soufre sous forme élémentaire S à partir d'un effluent contenant du H₂S selon la réaction chimique globale suivante :

2 H₂S + O₂ → 2 S + 2 H₂O.

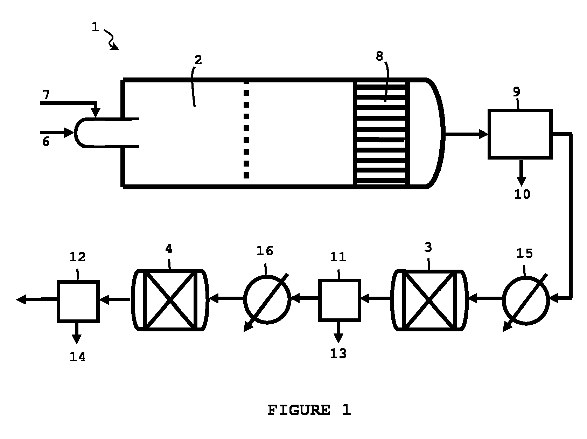

Une unité Claus classique est schématiquement représentée sur la **Figure 1****.** L'unité Claus **1** comprend d'une part un four **2,** dit four à réaction et d'autre part une série de réacteurs catalytiques **3** et **4.** En entrée du four **2,** on injecte un flux de gaz acide **6,** typiquement H₂S et CO₂, et un flux de gaz oxydant **7,** typiquement un gaz contenant de l'oxygène O₂, comme l'air. Au sein du four se déroule la première étape du procédé Claus, dite étape « thermique » où une partie de l'H₂S est brûlée avec l'oxygène selon la réaction :

H₂S + 3/2 O₂ → SO₂ + H₂O.

Cette réaction de combustion est très exothermique et la température des gaz issus de cette combustion est typiquement comprise entre 1000 °C et 1200 °C. Les gaz peuvent être refroidis par échange thermique indirect avec de l'eau, typiquement dans une chaudière de récupération thermique **8.** L'effluent peut ensuite être plus fortement refroidi dans un condenseur **9** dans lequel une partie du soufre formé dans le four **2,** sous forme élémentaire S, se condense et peut être évacuée par le conduit **10.** En effet, à cause de la haute température à l'intérieur du four **2,** une partie des composés soufrés réagissent selon la réaction de Claus pour former du soufre. Cependant, la réaction y est thermodynamiquement limitée, et le rendement maximal de conversion est de l'ordre de 60-70 %.

Le flux gazeux issu du condenseur **9** est conduit dans la série de réacteurs catalytiques **3** et **4.** Au sein de chacun de ces réacteurs se déroule la deuxième étape du procédé Claus, dite étape « catalytique Claus ». L'H₂S et le SO₂ réagissent ensemble à températures modérées, typiquement 200 à 300 °C, selon la réaction Claus :

2 H₂S + SO₂ ⇆ 3 S + 2 H₂O.

Des condenseurs **11** et **12** sont disposés respectivement après les réacteurs **3** et **4,** de manière à refroidir les effluents et à condenser le soufre sous forme élémentaire S à l'issue du passage à travers chaque réacteur. Le soufre est récupéré via les conduits **13** et **14.**

Des procédés Claus sont par exemple décrits dans les documents GB 2 187 444 et US 5 139 765.

Hormis la présence de H₂S, la présence d'autres composés soufrés, comme par exemple les mercaptans, dans les gaz d'hydrocarbures peut être préjudiciable à leur exploitation. Il existe des procédés de traitement de ces gaz qui visent à éliminer généralement tous les composés soufrés.

Ainsi, on peut citer les procédés de traitement conduisant à la production d'effluents combustibles soufrés de type « soufre pollué par les hydrocarbures » et qui consistent à réaliser un lavage des puits de gaz hypersulfurés au moyen d'un solvant physique hydrocarboné pour l'enlèvement des dépôts de soufre natif dans les installations de production (puits, séparateurs...). Nous citerons notamment, le procédé DSR® (« Downhole Sulphur recovery » selon la terminologie anglo-saxonne) qui consiste à réaliser un lavage des puits par un solvant physique de type hydrocarboné polyaromatique naphtalénique et dont la régénération aboutit à la production de soufre pollué contenant des résidus naphtaléniques. Les effluents soufrés séparés du gaz brut contiennent du soufre sous forme élémentaire, mais aussi une quantité résiduelle non négligeable de solvant, ce qui rend ces effluents impropres à la commercialisation.

On peut également citer les procédés de type MEROX (acronyme de « mercaptan oxidation », selon la terminologie anglo-saxonne) qui permettent d'éliminer les mercaptans des condensats de gaz naturels comme le GPL. Ces procédés ont pour résultat la conversion des mercaptans en composés disulfurés. Les effluents produits contenant ces composés disulfurés, qui sont couramment appelés DSO (« Di-Sulfide Oil » selon la terminologie anglo-saxonne), sont dans certains cas éliminés par incinération, ce qui peut créer des problèmes de rejets de composés soufrés dans l'atmosphère.

Il serait avantageux de pouvoir traiter les effluents combustibles soufrés, tels que les DSO ou les effluents de DSR®, pour récupérer le soufre sous forme élémentaire. Un tel traitement, environnementalement plus performant que l'incinération, pourrait en outre permettre de valoriser économiquement le soufre ainsi récupéré sous forme commercialisable.

Il a été envisagé de traiter lesdits effluents par combustion, de façon à convertir le soufre en SO₂, puis de traiter l'effluent de combustion pour pouvoir récupérer le soufre du SO₂ dans une unité Claus. La combustion permet également de transformer la totalité des composés hydrocarbonés en CO₂ et H₂O. Cependant, la combustion s'accompagne de la formation concomitante de composés chimiques oxydés, notamment du SO₃ et des NOₓ. La présence de ces deux composés dans les gaz de combustion, ainsi que l'oxygène en excès, rend difficile le traitement direct de ces effluents sur des catalyseurs Claus. On a constaté que ces composés peuvent provoquer une sulfatation des catalyseurs qui perdent leur activité rapidement. Il est donc avantageux d'éliminer les composés tels que SO₃, NOₓ et O₂ avant injection de l'effluent du traitement dans le procédé Claus.

Dans la demande internationale de brevet WO 92/19532, appartenant à la même famille que la demande de brevet US 5 508 013, il a été décrit un procédé de traitement d'un effluent combustible, pouvant éventuellement renfermer des composés soufrés oxydables en SO₂, avec un étage de réaction thermique et un étage catalytique Claus, l'étage de réaction thermique étant divisé en deux zones : une première zone où est effectuée la combustion de l'effluent combustible avec un excès d'air, et une seconde zone où un gaz acide est partiellement brûlé selon la méthode classique Claus, les effluents de combustion de la première zone étant introduits dans la seconde zone après avoir été mélangés à un autre flux de gaz acide. Ce document de l'art antérieur décrit par ailleurs la possibilité d'injecter, dans la première zone de combustion, un gaz acide. Toutefois, cette injection est effectuée directement dans la chambre de combustion, près de la sortie de cette chambre, et ce document ne décrit ni ne suggère d'étape réactionnelle de post-combustion, dans une chambre réactionnelle dédiée. Les inventeurs ont constaté que ce procédé ne permettait pas de résoudre les problèmes de l'art antérieur : l'excès d'oxygène et la présence notamment de SO₃ et NOₓ dans l'effluent issu de la première zone se sont avérés préjudiciables au bon fonctionnement de l'unité Claus à cause des problèmes de corrosion des installations et de l'empoisonnement des catalyseurs. La réduction des oxydes d'azote et du SO₃ dans la seconde zone de combustion, telle que décrite dans ce document de l'art antérieur, ne permet pas de résoudre le problème posé, qui est de protéger cette zone des effets corrosifs de ces composés.

Actuellement, il existe toujours un besoin de disposer d'un procédé de traitement d'effluents combustibles soufrés ne présentant pas les inconvénients de l'art antérieur, avantageusement compatible avec un procédé Claus.

### RESUME DE L'INVENTION

Les inventeurs ont mis au point un procédé en deux étapes permettant avantageusement de traiter un flux d'effluents combustibles soufrés, ledit procédé permettant de récupérer au moins en partie le soufre sous forme élémentaire. Le flux traité ne contient substantiellement pas de composés chimiques nuisibles aux réacteurs catalytiques Claus. Ce procédé consiste notamment en la succession de deux étapes : une étape de combustion et une étape de post-combustion.

La présente invention a pour objet un procédé de traitement d'un flux d'effluents combustibles soufrés selon la revendication 1.

### BREVE DESCRIPTION DES FIGURES

La **figure 1** représente schématiquement une unité classique Claus à 2 réacteurs catalytiques telle que connue dans l'art antérieur.
La **figure 2** représente une unité de traitement d'un flux d'effluents combustibles soufrés permettant de mettre en oeuvre le procédé objet de la présente invention.
La **figure 3** représente une variante de l'unité représentée sur la figure 2.
La **figure 4** représente une unité de traitement d'un flux d'effluents combustibles soufrés, permettant de mettre en oeuvre le mode de réalisation de la présente invention, dans lequel le flux traité soutiré de la chambre de post-combustion, éventuellement refroidi et/ou éventuellement partiellement désoufré, est directement introduit dans le four à réaction d'une unité Claus, en aval du brûleur principal de gaz acide.
La **figure 5** représente une variante de l'unité représentée sur la figure 4.
La **figure 6** représente une unité dédiée au traitement d'un flux d'effluents combustibles soufrés et permettant de mettre en oeuvre le mode de réalisation de la présente invention dans lequel le flux traité soutiré de la chambre de post-combustion, refroidi et partiellement désoufré, est introduit dans une série de deux réacteurs catalytiques Claus.

### DESCRIPTION DETAILLEE

Sauf indication spécifique contraire, l'expression « pourcent (%) en poids de soufre » désigne le pourcentage que représente l'élément soufre, quelle que soit sa forme chimique, en poids, par rapport au poids total considéré.

Le procédé objet de la présente invention a pour fonction de traiter un flux d'effluents combustibles soufrés. Ledit flux peut être gazeux ou liquide. Il contient des hydrocarbures susceptibles de subir une combustion. Le soufre peut se trouver sous n'importe quelle forme chimique, par exemple sous forme de soufre élémentaire S ou à l'état combiné dans des composés chimiques tels que le sulfure d'hydrogène, les mercaptans, les sulfures organiques, les disulfures organiques, les sulfoxydes et les sulfones. Avantageusement, ledit flux d'effluents combustibles soufrés contient entre 1% et 99,5% en poids de soufre. S'il s'agit d'un flux d'effluents combustibles pollué par du soufre, la concentration en soufre peut être comprise entre 1% et 25%. S'il s'agit d'un flux de soufre pollué par un effluent combustible, la concentration en soufre peut être comprise entre 95% et 99,5%.

Selon un mode de réalisation, le flux d'effluents combustibles soufrés traité dans le procédé selon l'invention est un flux de soufre pollué par des impuretés combustibles. Un tel flux peut être issu d'un procédé de type DSR®. Un effluent de procédé DSR® contient typiquement entre 95% et 99,5% en poids de soufre, sous forme élémentaire S. Le reste de l'effluent est généralement constitué par des hydrocarbures lourds du type aromatiques et polyaromatiques.

Selon un autre mode de réalisation, le flux d'effluents combustibles soufrés traité dans le procédé selon l'invention est un DSO. Le DSO est essentiellement constitué de composés organiques disulfurés. Par « composés organiques disulfurés », on désigne dans la présente invention les composés de formule générale R-S-S-R', dans laquelle R et R' sont identiques ou différents et représentent, indépendamment l'un de l'autre, un radical hydrocarboné. Parmi les composés chimiques disulfurés, on peut citer le DMDS (disulfure de diméthyle), le DEDS (disulfure de diéthyle), le DPDS (disulfure de dipropyle) et le DBDS (disulfure de dibutyle), et d'une façon plus large les disulfures de dialkyles et les disulfures de diaryles. Le DSO contient de préférence entre 20% et 55% en poids de soufre.

Dans une première étape, le flux d'effluents combustibles soufrés est introduit dans une chambre de combustion avec un gaz oxydant en excès. Le gaz oxydant est un gaz quelconque contenant de l'oxygène O₂. De préférence, le gaz oxydant est de l'air. Toutefois, sans sortir du cadre de la présente invention, le gaz oxydant peut être de l'oxygène pur, de l'air enrichi en oxygène, ou bien des mélanges en toutes proportions d'oxygène et d'un ou plusieurs gaz inertes.

L'injection du flux d'effluents combustibles soufrés et du gaz oxydant dans la chambre de combustion peut être réalisée selon toute méthode connue de l'homme du métier. Il est possible d'introduire dans la chambre de combustion un flux de vapeur d'eau en même temps que le flux d'effluents combustibles soufrés et le gaz oxydant. De préférence la chambre de combustion est équipée d'un brûleur, de moyens pour amener le flux d'effluents combustibles soufrés et le gaz oxydant au niveau dudit brûleur avec de préférence des débits réglables permettant de contrôler de façon appropriée le ratio gaz oxydant/combustible et l'excès résultant d'oxygène dans l'effluent de la combustion. Le flux d'effluents combustibles soufrés et le gaz oxydant peuvent, indépendamment l'un de l'autre, être préchauffés avant l'alimentation du brûleur.

Le flux d'effluents combustibles soufrés est injecté dans la chambre de combustion à une température comprise de préférence entre 20 °C et 150 °C, de façon plus préférée entre 30 °C et 80 °C, et de façon encore plus préférée entre 40 °C et 60 °C.

Le gaz oxydant est injecté dans la chambre de combustion à une température comprise de préférence entre 20 °C et 250 °C, de façon plus préférée entre 40 °C et 200 °C, et de façon encore plus préférée entre 80 °C et 120 °C.

La température de la réaction de combustion est limitée par la température limite tolérable par les matériaux de construction du four constitués essentiellement de matériaux réfractaires. Typiquement, avec une chambre de combustion classique, la température de combustion maximale tolérée est de 1450 - 1500 °C. Avantageusement, la température de la réaction de combustion du procédé objet de la présente invention est aussi élevée que possible, c'est-à-dire environ égale à la température maximale tolérée par les matériaux de construction de la chambre de combustion. La température de la réaction de combustion est de préférence comprise entre 1300 °C et 1500 °C, de façon plus préférée entre 1350 °C et 1450 °C, et de façon encore plus préférée entre 1400 °C et 1450 °C.

La température de la combustion fortement exothermique peut être contrôlée selon les méthodes connues par l'homme du métier. Une méthode économiquement avantageuse peut consister en l'injection d'un flux d'air dans la chambre de combustion. L'oxygène contenu dans ce flux d'air de régulation vient s'ajouter au gaz oxydant en excès dans la chambre de combustion. Sans sortir du cadre de la présente invention, la régulation de la température dans la chambre de combustion peut être effectuée selon tout moyen connu de l'homme du métier, par exemple par injection d'un flux gazeux inerte vis-à-vis de la réaction de combustion. Un autre moyen de contrôle de la température peut consister à refroidir la paroi du four à combustion par échange thermique indirect avec un fluide caloporteur externe, comme une circulation d'eau mise au contact de la paroi du four.

La pression à l'intérieur de la chambre de combustion est avantageusement choisie de façon à permettre aux effluents du procédé de traitement d'être injectés dans une unité Claus. Cette pression peut être comprise entre 0,2 et 1,5 bars, de façon plus préférée entre 0,3 et 1,0 bar, et de façon encore plus préférée entre 0,4 et 0,7 bar.

Les quantités relatives des flux d'effluents combustibles soufrés et du gaz oxydant sont ajustées l'une par rapport à l'autre de manière à ce que le gaz oxydant soit en excès par rapport au besoin correspondant à la combustion stoechiométrique de l'effluent combustible soufré. L'excès de O₂ dans l'effluent entrant dans la chambre de post-combustion est avantageusement supérieur à 0,5% vol, de façon préférée compris entre 1,0% et 3,0% vol, et de façon encore plus préférée compris entre 1,5% et 2,5% vol. La présence de cet excès de gaz oxydant permet d'assurer la combustion complète des hydrocarbures et du soufre dans la chambre de combustion. Par « combustion complète », au sens de la présente invention, on entend une combustion caractérisée en ce que l'effluent de combustion contient moins de 500 ppmv d'hydrocarbures résiduels. La matière hydrocarbonée est majoritairement transformée en CO₂ et H₂O, tandis que le soufre est majoritairement transformé en SO₂. L'effluent gazeux soutiré de la chambre de combustion est majoritairement constituée de CO₂, de H₂O, de SO₂ et d'O₂. Il peut contenir d'autres composés, en particulier des résidus de composés hydrocarbonés, des composés de type NOₓ et SO₃. Le SO₃ est le résultat de l'équilibre chimique SO₂ + ½ O₂ = SO₃ dans les conditions réactionnelles de la combustion. Les NOₓ formés sont d'origine dite « thermique » liée aux températures élevées mises en oeuvre dans l'étape de combustion.

Selon un mode de réalisation, la chambre de combustion est équipée de moyens pour homogénéiser les flux des effluents de combustion. Ces moyens sont classiques et bien connus de l'homme du métier. Il peut s'agir de préférence d'une paroi alvéolaire construite en matériaux réfractaires, disposée à l'intérieur de la chambre de combustion.

Dans une seconde étape, ledit effluent gazeux est introduit dans une chambre de post-combustion avec un gaz acide. Par « gaz acide », au sens de la présente invention, on entend un gaz contenant au moins 5% volumique de H₂S. Ledit gaz acide contient de préférence entre 15% et 100% volumique de H₂S, de façon plus préférée entre 20% et 100% volumique de H₂S, et de façon encore plus préférée entre 30% et 100% volumique de H₂S. Ledit gaz acide peut en outre contenir du CO₂, de préférence entre 0 et 85% volumique de CO₂, et de façon plus préférée entre 0 et 80% volumique de CO₂, et de façon encore plus préférée entre 0 et 70% volumique de CO₂. Selon un mode de réalisation, le gaz acide introduit dans la chambre de post-combustion est un gaz constitué à au moins 95% d'un mélange de H₂S et de CO₂.

La chambre de post-combustion est équipée d'un orifice d'entrée pour l'effluent de la chambre de combustion et d'un moyen pour injecter le gaz acide audit orifice. Un moyen d'injection est par exemple décrit dans la demande internationale de brevet WO 92/19532.

Le gaz acide réagit dans la chambre de post-combustion avec l'effluent gazeux de la chambre de combustion. Les réactions de la post-combustion entre le gaz acide et l'effluent gazeux sont des réactions de réduction d'autant plus favorisées que la température est élevée. La température de la réaction de post-combustion résultant notamment de la température des effluents de combustion, il est avantageux d'opérer avec des effluents de combustion à la température la plus élevée possible. En outre, le gaz acide peut être préchauffé avant son injection dans la chambre de post-combustion.

Toutefois, sans sortir du cadre de la présente invention, la température des réactions de post-combustion peut être régulée par tout moyen connu de l'homme du métier, par exemple en chauffant ou refroidissant la chambre par transfert thermique à travers la paroi de ladite chambre, ou en chauffant ou refroidissant l'effluent gazeux soutiré de la chambre de combustion et éventuellement le gaz acide.

La température des réactions de post-combustion est de préférence comprise entre 1100 °C et 1450 °C, de façon plus préférée entre 1150 °C et 1400 °C, et de façon encore plus préférée entre 1200 °C et 1350 °C.

La pression à l'intérieur de la chambre de post-combustion peut être comprise entre 0,15 et 1.45 bars, de façon plus préférée entre 0,25 et 0,95 bar, et de façon encore plus préférée entre 0,35 et 0,65 bar.

La seconde étape du procédé objet de la présente invention se caractérise par le fait que l'on introduit les flux gazeux à l'intérieur d'une chambre de post-combustion et que le temps de séjour de l'ensemble des flux gazeux à l'intérieur de ladite chambre de post-combustion est au moins supérieur à 0,5 seconde. Ce temps de séjour peut avantageusement être compris entre 0,5 et 10 secondes, de façon plus préférée entre 0,7 et 2,5 secondes, et de façon encore plus préférée entre 1,0 et 2,0 secondes. Les inventeurs ont établit qu'un temps de séjour minimum de 0,5 seconde est nécessaire pour que les réactions post-combustion prennent place. La chambre de post-combustion est dimensionnée pour respecter ce temps de séjour, en fonction du débit de réactifs du procédé. La présence d'une étape de post-combustion, dans une chambre de post-combustion dans laquelle les gaz réactifs ont un temps de séjour minimal de 0,5 seconde, permet avantageusement de résoudre un des problèmes constaté dans l'art antérieur, qui est la corrosion et l'empoisonnement des catalyseurs des installations en aval, en particulier de l'unité Claus, par notamment les composés SO₃ et NOₓ.Dans la présente demande, le temps de séjour est donné aux conditions normales de température et de pression (en abrégé TPN), soit une température de 0 °C et une pression de 1 atm.

Selon un mode de réalisation avantageux, la chambre de post-combustion est équipée de moyens pour homogénéiser les flux. Ces moyens sont classiques et bien connus de l'homme du métier. Il peut s'agir de préférence d'une paroi alvéolaire construite en matériaux réfractaires, disposée à l'intérieur de la chambre de post-combustion.

La mise en contact du gaz acide avec l'effluent de combustion permet entre autres :
- la consommation de l'O₂ présent dans l'effluent,
- la réduction des résidus de composés hydrocarbonés, du SO₂ et des composés de type SO₃ et NOₓ.

Les quantités relatives de l'effluent et du gaz acide sont ajustées l'une par rapport à l'autre de manière à ce que la totalité des composés oxydants soit consommée par réaction avec le H₂S du gaz acide. Par « composés oxydants », on entend ici O₂, SO₃ et NOₓ. Ainsi, le flux traité soutiré de la chambre de post-combustion présente une teneur en O₂ inférieure à 500 ppmv, de préférence inférieure à 100 ppmv, et de façon plus préférée inférieure à 50 ppmv. En outre, le flux traité soutiré de la chambre de post-combustion présente avantageusement une teneur en SO₃ inférieure à 200 ppmv, de préférence inférieure à 100 ppmv, et de façon plus préférée inférieure à 50 ppmv. Avantageusement, le flux traité soutiré de la chambre de post-combustion présente une teneur en NOₓ inférieure à 100 ppmv, de préférence inférieure à 70 ppmv, et de façon plus préférée inférieure à 50 ppmv.

Un objectif de cette seconde étape étant de consommer l'oxygène présent dans l'effluent de la première étape, il est implicite qu'aucun gaz oxydant ne doit être introduit dans la chambre de post-combustion avec l'effluent gazeux et le gaz acide. En particulier, dans la seconde étape du procédé selon l'invention, aucun flux d'air, d'oxygène pur ou d'air enrichi en oxygène n'est introduit dans la chambre de post-combustion. Autrement dit, la seconde étape de la réaction selon l'invention consiste à faire réagir un mélange consistant en l'effluent gazeux de la chambre de combustion et un gaz acide.

Le procédé de traitement d'un flux d'effluents combustibles soufrés peut en outre comprendre une étape consistant à refroidir le flux traité soutiré de la chambre de post-combustion. Le refroidissement peut être réalisé par échange thermique indirect avec un flux quelconque, de préférence de l'eau. Selon un mode de réalisation préféré, ledit flux traité est refroidi par échange thermique indirect avec de l'eau dans une chaudière de récupération thermique pour production de vapeur. Le flux traité peut être refroidi jusqu'à une température comprise de préférence entre 250 °C et 350 °C, de façon plus préférée entre 280 °C et 330 °C, et de façon encore plus préférée entre 290 °C et 320 °C.

Le flux traité soutiré de la chambre de post-combustion peut contenir du soufre élémentaire S à l'état vapeur, obtenu par la réaction de Claus qui se produit sous l'effet de la haute température dans la chambre de post-combustion. Le procédé de traitement d'un flux d'effluents combustibles soufrés selon la présente invention peut comprendre en outre une étape consistant à éliminer le soufre sous forme élémentaire du flux final soutiré de la chambre de post-combustion. Pour cela, le flux traité peut être refroidi dans un condenseur. En sortie de ce condenseur est récupéré d'une part du soufre liquide sous forme élémentaire S et d'autre part un effluent partiellement désoufré. De préférence, l'étape optionnelle d'élimination du soufre sous forme élémentaire est réalisée après avoir mis en oeuvre l'étape optionnelle de refroidissement du flux traité soutiré de la chambre de post-combustion.

Le flux traité obtenu par le procédé objet de la présente invention, éventuellement refroidi et/ou éventuellement partiellement désoufré, peut avantageusement être traité dans un procédé Claus.

Selon un premier mode de réalisation, le procédé de traitement d'un flux d'effluents combustibles soufrés, objet de la présente invention, comprend en outre une étape consistant à introduire le flux traité soutiré de la chambre de post-combustion, éventuellement refroidi et/ou éventuellement partiellement désoufré, dans le four à réaction d'une unité Claus, en complément d'une charge de gaz acide et de gaz oxydant alimentant le brûleur du four à réaction Claus.

De préférence, le débit molaire de soufre contenu dans le flux d'effluents combustibles soufrés à traiter est au plus égal à 50%, de façon plus préférée compris entre 3% et 30%, et de façon encore plus préférée compris entre 5% et 10% du débit molaire du soufre contenu sous forme de H₂S dans la totalité des gaz acides utilisés dans la chambre de post-combustion et dans le brûleur du four à réaction Claus.

Le procédé de Claus est de préférence mis en oeuvre selon les techniques bien connues de l'homme du métier. Selon ce mode de réalisation, les débits du flux traité introduit dans le four à réaction de l'unité Claus et du flux total constitué par la charge de gaz acide et de gaz oxydant sont ajustés les uns par rapport aux autres de manière à ce que, de préférence, l'effluent de l'étape thermique de la réaction de Claus présente un rapport molaire H₂S/SO₂ d'environ 2.

Ce premier mode de réalisation est particulièrement bien adapté au cas où le débit molaire du flux d'effluents combustibles soufrés initial à traiter contient au plus 50 t/jour de soufre, de façon plus préférée au plus 30 t/jour de soufre, et de façon encore plus préférée au plus 10 t/jour de soufre. En outre, ce premier mode de réalisation est particulièrement bien adapté au cas où une unité Claus est par ailleurs mise en oeuvre, le procédé objet de la présente invention permettant alors de traiter et de valoriser le flux d'effluents combustibles soufrés, de manière simple et économique, directement et sans ajustement complexe dans ladite unité Claus.

Selon un second mode de réalisation, le procédé de traitement d'un flux d'effluents combustibles soufrés objet de la présente invention comprend en outre une étape consistant à introduire le flux traité soutiré de la chambre de post-combustion, éventuellement refroidi et/ou éventuellement partiellement désoufré, dans un réacteur ou une série de plusieurs réacteurs catalytiques Claus.

Cette étape du procédé de Claus est de préférence mise en oeuvre selon les techniques bien connues de l'homme du métier. En particulier, les catalyseurs présents dans les réacteurs sont typiquement ceux connus de l'homme du métier pour catalyser la réaction de Claus et les réactions associées telles que les réactions d'hydrolyse des composés COS et CS₂ formés dans le four à réaction. Parmi ces catalyseurs on peut citer : les bauxites, les alumines activées, les oxydes de titane et les catalyseurs dérivés obtenus par imprégnation d'un composé actif.

Avantageusement, le flux traité soutiré de la chambre de post-combustion, éventuellement refroidi et/ou éventuellement partiellement désoufré, comprend les composés H₂S et SO₂ avec un rapport molaire H₂S/SO₂ compris de préférence entre 1,0 et 3,0, de façon plus préférée entre 1,5 et 2,5, et de façon encore plus préférée entre 1,9 et 2,1. Le respect de ce ratio permet avantageusement d'optimiser les rendements des étapes catalytiques de l'unité Claus. Le contrôle du rapport molaire est de préférence exercé selon les moyens connus de l'homme du métier, qui consistent principalement à réguler les débits des flux entrant dans les chambres de combustion et de post-combustion.

Lorsqu'une série de plusieurs réacteurs est mise en oeuvre, des condenseurs peuvent être disposés après lesdits réacteurs, de manière à condenser le soufre sous forme élémentaire S produit à l'issu de chaque réacteur. Des échangeurs de chaleurs peuvent également être disposés à l'entrée des réacteurs pour réchauffer les flux entrants des réacteurs. Il est ainsi possible d'optimiser le fonctionnement global de l'unité Claus pour obtenir un rendement maximal de récupération du soufre.

La quantité de soufre restant dans les gaz résiduaires à la sortie des étapes catalytiques de l'unité Claus est de préférence inférieure à 7%, de façon plus préférée inférieure à 5%, et de façon encore plus préférée inférieure à 0,1% de la charge totale en soufre introduite sous forme de gaz acide et du soufre contenu dans l'effluent combustible soufré.

Ce second mode de réalisation est particulièrement bien adapté au cas où le débit molaire du flux d'effluents combustibles soufrés initial à traiter contient plus de 15 t/jour de soufre, de façon plus préférée compris entre 25 et 50 t/jour de soufre, et de façon encore plus préférée compris entre 30 et 40 t/jour de soufre. Ce second mode de réalisation permet de disposer avantageusement d'une unité dédiée uniquement au traitement du flux d'effluents combustibles soufrés. Cette unité dédiée présente l'avantage d'être autonome et permet de récupérer d'un flux d'effluents combustibles le soufre sous une forme économiquement valorisable, avec contrôle des rejets atmosphériques de SO₂. Ce second mode de réalisation est possible du fait que le flux traité selon le procédé objet de la présente invention ne contient avantageusement substantiellement pas de composés chimiques nuisibles aux installations et aux catalyseurs Claus.

Le procédé objet de la présente invention peut en outre comprendre une étape supplémentaire consistant à recycler dans la chambre de combustion au moins une partie d'un flux du procédé ne contenant substantiellement pas d'oxygène dont la température est inférieure à 300 °C, de préférence inférieure à 160 °C. Par « ne contenant substantiellement pas d'oxygène », on entend au sens de la présente invention une teneur en O₂ inférieure à 500 ppmv, de façon plus préférée inférieure à 100 ppmv, et de façon encore plus préfère inférieure à 50 ppmv.

Le recyclage peut être mis en oeuvre grâce aux techniques classiques connues de l'homme du métier, par exemple à l'aide d'une soufflante, ou à l'aide d'un éjecteur de vapeur.

Ledit flux du procédé est destiné à refroidir l'effluent de combustion et ainsi à limiter l'excès d'air nécessaire pour maintenir la température de la combustion en dessous de la température admissible pour la tenue des matériaux de construction (1450 - 1500 °C). Ce flux procédé de recyclage peut être choisi parmi :
- le flux traité soutiré de la chambre de post-combustion refroidi, obtenu après une étape de refroidissement,
- le flux traité refroidi et partiellement désoufré, obtenu après une étape de refroidissement et une étape de condensation du soufre sous forme élémentaire,
- si le flux traité soutiré de la chambre de post-combustion, éventuellement refroidi et/ou éventuellement partiellement désoufré, est introduit dans un réacteur ou une série de plusieurs réacteurs catalytiques Claus, alors un flux prélevé à un niveau quelconque de la partie catalytique de ce procédé.

De préférence, le flux au moins en partie recyclé dans la chambre de combustion est le flux traité refroidi partiellement désoufré, obtenu après une étape de condensation du soufre formé dans l'étape de post-combustion.

L'injection dudit flux recyclé au niveau de la chambre de combustion permet avantageusement de réguler la température de la réaction de combustion, sans augmenter l'excès d'oxygène dans la chambre de combustion comme c'est le cas lorsque la régulation thermique est effectuée avec un supplément d'air, et sans augmenter le coût du procédé comme c'est le cas lorsque la régulation thermique est effectuée avec un gaz inerte.

D'autres caractéristiques et avantages de l'invention apparaîtront des modes de réalisations décrits ci-dessous.

### DESCRIPTION DETAILLEE DES FIGURES

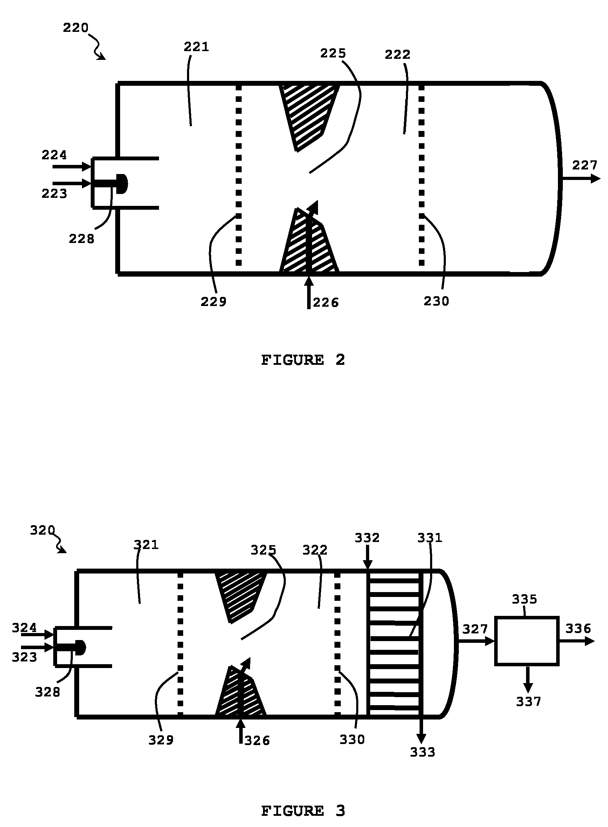

La numérotation des figures 2 à 6 est effectuée sous la forme AXY dans laquelle le A est le numéro de la figure et XY le numéro de l'équipement, par exemple 2XY pour la figure 2 ou 3XY pour la figure 3. Les chiffres X et Y sont identiques pour un même équipement quelle que soit la figure, par exemple 220, 320, 420, 520 et 620 pour l'unité de traitement du flux d'hydrocarbures contenant du soufre respectivement dans les figures 2, 3, 4, 5 et 6.

Sur la **figure 2** est représentée une unité de traitement d'un flux d'effluents combustibles soufrés permettant de mettre en oeuvre le procédé objet de la présente invention. L'unité de traitement du flux d'effluents combustibles soufrés **220** comprend une chambre de combustion **221** et une chambre de post-combustion **222.** Un flux d'effluents combustibles soufrés est introduit via le conduit **223** et un gaz oxydant est introduit via le conduit **224.** Un brûleur **228** permet d'initier la réaction de combustion. L'effluent gazeux produit est soutiré de la chambre de combustion **221** et est introduit dans la chambre de post-combustion **222** via un orifice **225.** Un gaz acide est introduit dans la chambre de post-combustion **222** via un moyen d'injection **226.** Selon le mode de réalisation représenté sur la **figure 2****,** le moyen d'injection **226** est localisé au niveau de l'orifice **225.** La chambre de combustion **221** et la chambre de combustion **222** sont équipées de deux parois alvéolaires, respectivement **229** et **230.** Ces parois alvéolaires **229** et **230** permettent d'assurer l'homogénéisation des flux gazeux à l'intérieur des deux chambres **221** et **222.** Le flux traité est soutiré de la chambre de post-combustion **222** via le conduit **227.**

Sur la **figure 3****,** l'unité de traitement du flux d'effluents combustibles soufrés **320** est en outre équipée d'un échangeur de chaleur **331.** Cet échangeur **331** est installé dans le prolongement de la chambre de post-combustion **322.** Selon le mode de réalisation représenté sur la **figure 3****,** l'échangeur de chaleur **331** est une chaudière de récupération thermique : de l'eau entrant dans l'échangeur de chaleur **331** par le conduit **332** en sort par le conduit **333** à une température plus élevée, généralement sous forme de vapeur d'eau sous pression. L'effluent de la chambre de post-combustion **322** sort refroidi par le conduit **327.** Il est introduit dans un condensateur **335,** dans lequel le soufre sous forme élémentaire S est condensé et est récupéré par le conduit **337.** Le flux traité refroidi et partiellement désoufré sort du condensateur **335** via le conduit **336.**

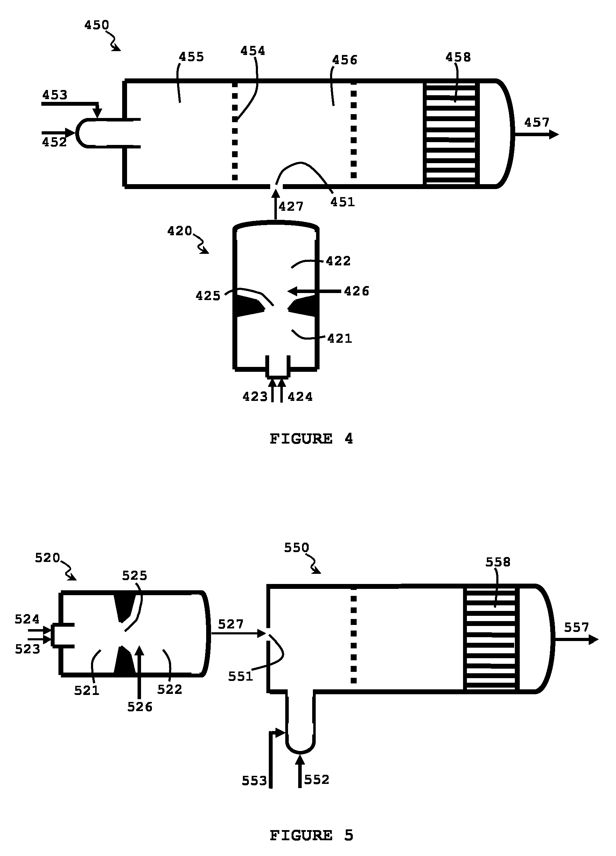

Les **figures 4** et **5** représentent une unité de traitement d'un flux d'effluents combustibles soufrés permettant de mettre en oeuvre le mode de réalisation de la présente invention dans lequel le flux traité soutiré de la chambre de post-combustion, éventuellement refroidi et/ou éventuellement partiellement désoufré, est introduit directement dans le four à réaction d'une unité Claus, en complément d'une charge de gaz riche en H₂S et de gaz oxydant.

Dans la **figure 4****,** l'unité de traitement du flux d'effluents combustibles soufrés **420** comprend une chambre de combustion **421** et une chambre de post-combustion **422.** Un flux d'effluents combustibles soufrés est introduit via le conduit **423** et un gaz oxydant est introduit via le conduit **424.** Un brûleur (non représenté) permet d'initier la réaction de combustion. L'effluent gazeux produit est soutiré de la chambre de combustion **421** et est introduit dans la chambre de post-combustion **422** via un orifice **425.** Un gaz acide est introduit dans la chambre de post-combustion **422** via un moyen d'injection **426.** Le flux traité est soutiré de la chambre de post-combustion **422** via le conduit **427.** Ce flux traité est introduit dans le four d'une unité Claus **450** via l'orifice **451** qui est situé sur la paroi latérale du four **450.** Un gaz riche en H₂S est introduit à l'entrée du four **450,** située à une extrémité dudit four **450,** par le conduit **452.** Un gaz oxydant est également introduit en entrée du four **450** par le conduit **453.** Un brûleur (non représenté) permet d'initier la réaction de combustion à l'intérieur du four **450.** Le four **450** comprend une paroi alvéolaire **454** séparant le four en deux chambres **455** et **456.** La paroi alvéolaire **454** permet d'assurer l'homogénéisation des flux gazeux. L'orifice **451** est prévu dans la chambre **456,** de façon à ce que le flux traité parvenant par le conduit **427** se mélange avec les flux gazeux présents dans le four **450** déjà homogénéisés. Les flux gazeux à l'intérieur de la chambre **455** présentent un rapport molaire H₂S/SO₂ de préférence égal à 2. Les flux gazeux à l'intérieur de la chambre **456** présentent un rapport molaire H₂S/SO₂ de préférence compris entre 1,9 et 2,1, de façon plus préféré environ égal à 2. L'issue permettant la sortie de l'effluent du four **450** est situé à l'extrémité amont de la chambre **456,** en aval de la paroi alvéolaire **454.** Un échangeur de chaleur **458** est installé dans le prolongement de la chambre **456.** Après avoir été refroidi par échange thermique indirect avec l'échangeur **458,** un effluent est soutiré du four **450** via le conduit **457.**

Dans la **figure 5****,** l'unité de traitement du flux d'effluents combustibles soufrés **520** comprend une chambre de combustion **521** et une chambre de post-combustion **522.** Un flux d'effluents combustibles soufrés est introduit via le conduit **523** et un gaz oxydant est introduit via le conduit **524.** Un brûleur (non représenté) permet d'initier la réaction de combustion. L'effluent gazeux produit est soutiré de la chambre de combustion **521** et est introduit dans la chambre de post-combustion **522** via un orifice **525.** Un gaz acide est introduit dans la chambre de post-combustion **522** via un moyen d'injection **526.** Le flux traité est soutiré de la chambre de post-combustion **522** via le conduit **527.** Ce flux traité est introduit dans le four d'une unité Claus **550** via l'orifice **551** situé à une extrémité dudit four **550.** L'orifice **551** permettant d'introduire le flux traité issu de la chambre de post-combustion **526,** ledit flux traité est introduit dans le four à réaction d'une unité Claus **550** via le conduit **527,** situé à une extrémité dudit four **550.** L'introduction du gaz riche en H₂S dans le four **550** par le conduit **552** et l'introduction du gaz oxydant dans le four **550** par le conduit **553** est effectuée de façon latérale par rapport au four **550.** Les flux gazeux à l'intérieur du four **550** présentent un rapport molaire H₂S/SO₂ de préférence compris entre 1,9 et 2,1, de façon plus préféré environ égal à 2. L'issue permettant la sortie de l'effluent du four **550** est située à l'extrémité du four **550.** Un échangeur de chaleur **558** est installé dans le prolongement du four **550.** Après avoir été refroidi par échange thermique indirect avec l'échangeur **558,** un effluent est soutiré du four **550** via le conduit **557.**

Les effluents recueillis par les conduits **457** et **557** peuvent ensuite être traités dans une étape catalytique Claus.

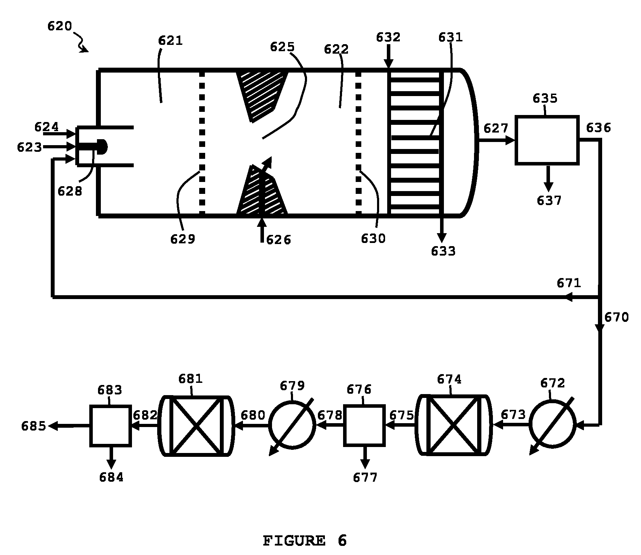

La **figure 6** représente une unité de traitement d'un flux d'effluents combustibles soufrés permettant de mettre en oeuvre le mode de réalisation de la présente invention dans lequel le flux traité soutiré de la chambre de post-combustion, refroidi et partiellement désoufré, est introduit dans une série de deux réacteurs catalytiques Claus.

Comme dans le mode de réalisation représenté sur la **figure 3****,** l'unité de traitement du flux d'effluents combustibles soufrés **620** est équipée d'une chaudière de récupération thermique **631** et d'un condenseur **635,** dans lequel le soufre sous forme élémentaire S est condensé et est récupéré par le conduit **637.** Le flux traité refroidi et partiellement désoufré est récupéré du condenseur **635** via le conduit **636.** Ledit flux est alors divisé en deux parties: la première partie du flux est recyclée dans la chambre de combustion **621** via le conduit **671,** et la seconde partie du flux est amenée dans une série de réacteurs catalytiques Claus via le conduit **670.** Cette seconde partie du flux est introduite dans un échangeur de chaleur **672** et ressort par le conduit **673** à une température adéquate à la réaction catalytique qui prend place dans le premier réacteur **674.** Le flux est amené dans le premier réacteur catalytique **674.** Les catalyseurs sont typiquement ceux connus de l'homme du métier pour catalyser la réaction de Claus. Le flux ressort du premier réacteur **674** via le conduit **675,** et est introduit dans un condenseur **676** dans lequel le soufre sous forme élémentaire S est condensé et est extrait par le conduit **677.** Le flux ressort du condenseur **676** via le conduit **678** et est introduit dans un échangeur de chaleur **679.** Il en ressort par le conduit **680** à une température adéquate à la réaction catalytique qui prend place dans le second réacteur **681.** Le flux est amené dans le second réacteur catalytique **681,** puis en ressort via le conduit **682,** et est introduit dans un condenseur **683** dans lequel le soufre sous forme élémentaire S est condensé et est extrait par le conduit **684.** Le flux traité désoufré ressort du condensateur **684** via le conduit **685.**

Le soufre sous forme élémentaire S, récupéré par les conduits **637, 677** et **684,** est d'une qualité suffisante pour être économiquement valorisable. Les gaz rejetés par le conduit **685** sont essentiellement exempts de soufre. Ils peuvent être brûlés dans un incinérateur classique avant leur émission atmosphérique.

D'autres caractéristiques et avantages de l'invention apparaîtront à la lecture de l'exemple non limitatif et purement illustratif qui va suivre :

### EXEMPLES

Des essais de récupération de soufre élémentaire ont été réalisés en traitant, par deux étapes successives, un flux d'effluents combustibles soufrés en mélange avec un gaz oxydant, par un flux de gaz acide de désulfuration d'un gaz naturel sulfureux.

On a opéré dans une installation analogue à celle décrite à la figure 6, c'est-à-dire utilisant un four conçu selon l'invention avec une chambre de combustion dudit flux et une chambre de post-combustion au gaz acide, suivi de 2 étapes catalytiques Claus pour le traitement des effluents du four. Chaque étape était équipée d'un échangeur de chaleur, d'un réacteur à alumines activées classiques et d'un condenseur.

Le flux d'effluents combustibles soufrés à traiter était un DSO renfermant, en poids, 6,1% de DMDS, 46,7% de DEDS, 24,1% de DPDS, 14,3% de DBDS, 2,2% de DPDS et 1,3% de DHDS. Le gaz oxydant utilisé était de l'air. Ledit flux liquide et l'air de combustion ont été amenés au bruleur de la chambre de combustion avec des débits respectifs de 16,1 kmol/h et 1000,1 kmol/h et des températures respectivement égales à 45 °C et 105 °C.

La température dans la chambre de combustion 621 était d'environ 1450 °C et le temps de séjour de l'ensemble des effluents gazeux à l'intérieur de la chambre de combustion était d'environ 1 seconde.

Après combustion complète de l'ensemble des effluents gazeux, lesdits effluents ont été ensuite introduits dans la chambre de post-combustion, le passage du gaz dans cette deuxième chambre s'est accompagné de l'introduction d'un gaz acide de désulfuration par le biais de moyens d'injection 626. Ledit gaz acide, composé de 51,7% volumique de H₂S et de 43,0% de CO₂, a été ajouté, à 45 °C, dans la chambre de post-combustion à raison de 288,2 kmol/h.

La température dans la chambre de post-combustion 622 était d'environ 1238 °C et le temps de séjour de l'ensemble des flux gazeux à l'intérieur de la chambre de post-combustion était d'environ 1 seconde.

A l'issue de l'étape de post-combustion, le flux gazeux a été refroidi à 300 °C dans la chaudière de récupération thermique 631 avant d'être récupéré par le conduit 627, avec un débit de 1752,2 kmol/h, et introduit dans le condenseur 635. Du soufre sous forme élémentaire S a alors été condensé à 155 °C et récupéré par le conduit 637. A ce stade du procédé, le rendement de récupération du soufre était de 53,0%.

Le gaz produit, partiellement désoufré et refroidi à 155 °C, a été récupéré en sortie du conduit 636 puis divisé en deux parties :
- La première partie, correspondant à 26% du débit de gaz à la sortie du condenseur, a été recyclée dans la chambre de combustion avec un débit de 452,8 kmol/h,
- Et la deuxième partie, correspondant à 74% du débit de gaz à la sortie du condenseur, a été introduite, avec un débit de 1284,4 kmol/h dans une série de deux étages catalytiques Claus.

Après le traitement dans les 2 étages catalytiques Claus, les gaz résiduaires obtenus à la sortie du dernier condenseur 683, ont été récupérés à 135 °C avec un débit de 1266,1 kmol/h.

A l'issue du procédé, le rendement global de récupération du soufre était de 92,6%.

## Revendications

1. Procédé de traitement d'un flux d'effluents combustibles soufrés, comprenant les étapes successives consistant à :
- introduire dans une chambre de combustion ledit flux et un gaz oxydant en excès, effectuer la combustion complète dudit flux avec un excès du gaz oxydant, et soutirer l'effluent gazeux de la chambre de combustion et l'introduire dans une chambre de post-combustion via un orifice;
- introduire un gaz acide dans la chambre de post-combustion via un moyen d'injection ;
- faire réagir dans la chambre de post-combustion, un mélange consistant en ledit effluent gazeux et ledit gaz acide, ledit gaz acide étant en quantité suffisante pour que la totalité des composés oxydants soit consommée par réaction avec le sulfure d'hydrogène du gaz acide, les composés oxydants étant O₂, SO₃ et NO_{X}, et soutirer le flux traité, le temps de séjour de l'ensemble des flux gazeux à l'intérieur de ladite chambre de post-combustion étant au moins supérieur à 0,5 seconde;
**caractérisé en ce que** le moyen d'injection est localisé au niveau de l'orifice.

2. Procédé selon la revendication 1, **caractérisé en ce que** le flux d'effluents combustibles soufrés traité dans le procédé selon l'invention est un flux de soufre pollué par des impuretés combustibles.

3. Procédé selon la revendication 1, **caractérisé en ce que** le flux d'effluents combustibles soufrés traité dans le procédé selon l'invention est un DSO.

4. Procédé selon l'une quelconque des revendications 1 à 3, **caractérisé en ce que** la température de la réaction de combustion est comprise entre 1300 °C et 1500 °C, de façon préférée entre 1350 °C et 1450 °C, et de façon encore plus préférée entre 1400 °C et 1450 °C.

5. Procédé selon l'une quelconque des revendications 1 à 4, ledit procédé comprenant en outre une étape consistant à refroidir le flux traité soutiré de la chambre de post-combustion.

6. Procédé selon l'une quelconque des revendications 1 à 5, ledit procédé comprenant en outre une étape consistant à éliminer le soufre sous forme élémentaire du flux traité soutiré de la chambre de post-combustion.

7. Procédé selon l'une quelconque des revendications 1 à 6, ledit procédé comprenant en outre une étape consistant à introduire le flux traité soutiré de la chambre de post-combustion, éventuellement refroidi et/ou éventuellement partiellement désoufré, dans le four à réaction d'une unité Claus, en complément d'une charge de gaz acide et de gaz oxydant alimentant le brûleur du four à réaction Claus.

8. Procédé selon l'une quelconque des revendications 1 à 6, ledit procédé comprenant en outre une étape consistant à introduire le flux traité soutiré de la chambre de post-combustion, éventuellement refroidi et/ou éventuellement partiellement désoufré, dans un réacteur ou une série de plusieurs réacteurs catalytiques Claus.

9. Procédé selon l'une quelconque des revendications 1 à 8, ledit procédé comprenant en outre une étape supplémentaire consistant à recycler dans la chambre de combustion au moins une partie d'un flux du procédé ne contenant substantiellement pas d'oxygène dont la température est inférieure à 300 °C, de préférence inférieure à 160 °C.

10. Procédé selon la revendication 9, **caractérisé en ce que** le flux au moins en partie recyclé dans la chambre de combustion est le flux traité refroidi partiellement désoufré, obtenu après une étape de refroidissement et une étape de condensation du soufre formé dans l'étage de post-combustion.

## Patentansprüche

1. Verfahren zur Behandlung eines Flusses von brennbaren schwefelhaltigen Abflüssen, welches die folgenden aufeinanderfolgenden Schritte umfasst:
- Einführen des Flusses und eines Überschusses an Oxidiergas in eine Brennkammer, Durchführen der vollständigen Verbrennung des Flusses mit einem Überschuss an Oxidiergas und Entfernen des gasförmigen Abflusses aus der Brennkammer und Einführen desselben in eine Nachbrennkammer über eine Öffnung;
- Einführen eines sauren Gases in die Nachbrennkammer mittels eines Injektionsmittels;
- Reagierenlassen einer Mischung aus gasförmigem Abfluss und saurem Gas in der Nachbrennkammer, wobei das saure Gas in ausreichender Menge vorliegt, sodass die Gesamtheit der oxidierenden Verbindungen durch Reaktion mit dem Schwefelwasserstoff des sauren Gases verbraucht wird, wobei die oxidierenden Verbindungen O₂, SO₃ und NOₓ sind, und Entfernen des behandelten Flusses, wobei die Verweildauer der Gesamtheit der Gasflüsse im Inneren der Nachbrennkammer wenigstens mehr als 0,5 Sekunden beträgt;
**dadurch gekennzeichnet, dass** sich das Injektionsmittel auf Höhe der Öffnung befindet.

2. Verfahren nach Anspruch 1, **dadurch gekennzeichnet, dass** der in dem erfindungsgemäßen Verfahren behandelte Fluss von brennbaren schwefelhaltigen Abflüssen ein mit brennbaren Verunreinigungen verschmutzter Schwefelfluss ist.

3. Verfahren nach Anspruch 1, **dadurch gekennzeichnet, dass** der in dem erfindungsgemäßen Verfahren behandelte Fluss von brennbaren schwefelhaltigen Abflüssen ein DSO ist.

4. Verfahren nach einem der Ansprüche 1 bis 3,
**dadurch gekennzeichnet, dass** die Temperatur der Verbrennungsreaktion zwischen 1300 °C und 1500 °C liegt, bevorzugt zwischen 1350 °C und 1450 °C, und noch stärker bevorzugt zwischen 1400 °C und 1450 °C.

5. Verfahren nach einem der Ansprüche 1 bis 4,
**dadurch gekennzeichnet, dass** das Verfahren ferner einen Schritt umfasst, der darin besteht, den aus der Nachbrennkammer entfernten behandelten Fluss abzukühlen.

6. Verfahren nach einem der Ansprüche 1 bis 5,
**dadurch gekennzeichnet, dass** das Verfahren ferner einen Schritt umfasst, der darin besteht, den Schwefel in elementarer Form aus dem aus der Nachbrennkammer entfernten behandelten Fluss zu entfernen.

7. Verfahren nach einem der Ansprüche 1 bis 6,
**dadurch gekennzeichnet, dass** das Verfahren ferner einen Schritt umfasst, der darin besteht, den aus der Nachbrennkammer entfernten behandelten Fluss, gegebenenfalls abgekühlt und/oder gegebenenfalls teilweise entschwefelt in den Reaktionsofen einer Claus-Anlage einzuführen, zusätzlich zu einer Charge sauren Gases und oxidierenden Gases, die dem Brenner des Claus-Reaktionsofens zugeführt werden.

8. Verfahren nach einem der Ansprüche 1 bis 6,
**dadurch gekennzeichnet, dass** das Verfahren ferner einen Schritt umfasst, der darin besteht, den aus der Nachbrennkammer entfernten behandelten Fluss, gegebenenfalls abgekühlt und/oder gegebenenfalls teilweise entschwefelt in einen oder eine Reihe mehrerer katalytischer Claus-Reaktoren einzuführen.

9. Verfahren nach einem der Ansprüche 1 bis 8,
wobei das Verfahren ferner einen zusätzlichen Schritt umfasst, der darin besteht, in der Brennkammer wenigstens einen Teil eines Flusses des Verfahrens aufzubereiten, der im Wesentlichen keinen Sauerstoff aufweist und dessen Temperatur geringer als 300 °C ist, vorzugsweise geringer als 160 °C.

10. Verfahren nach Anspruch 9,
**dadurch gekennzeichnet dass** der wenigstens teilweise in der Brennkammer aufbereitete Fluss der abgekühlte, teilweise entschwefelte behandelte Fluss ist, der nach einem Abkühlungsschritt und einem Kondensierungsschritt des in dem Schritt des Nachbrennens gebildeten Schwefels erhalten wurde.

## Claims

1. Process for treating a sulfureous combustible effluent stream, comprising the successive steps consisting in:
- introducing into a combustion chamber said stream and an oxidant gas in excess, performing the total combustion of said stream with an excess of the oxidant gas, and withdrawing the gaseous effluent from the combustion chamber and introducing it into a post-combustion chamber via an orifice;
- introducing an acidic gas into said post-combustion chamber via an injection means;
- reacting, in said post-combustion chamber, a mixture consisting of said gaseous effluent and said acidic gas, said acidic gas being in an amount sufficient for all of the oxidant compounds to be consumed by reaction with the hydrogen sulfide of the acidic gas, the oxidant compounds being O₂, SO₃ and NOₓ, and withdrawing the treated stream, the residence time of all of the gaseous streams in said post-combustion chamber being at least greater than 0.5 second;
**characterized in that** the injection means is located in the orifice.

2. Process according to Claim 1, **characterized in that** the sulfureous combustible effluent stream treated in the process according to the invention is a stream of sulfur polluted with combustible impurities.

3. Process according to Claim 1, **characterized in that** the sulfureous combustible effluent stream treated in the process according to the invention is a DSO.

4. Process according to any one of claims 1 to 3, **characterized in that** the temperature of the combustion reaction is between 1300°C and 1500°C, preferably between 1350°C and 1450°C, more preferably between 1400°C and 1450°C.

5. Process according to any one of claims 1 to 4, said process also comprising a step consisting in cooling the treated stream withdrawn from the post-combustion chamber.

6. Process according to any one of claims 1 to 5, said process also comprising a step consisting in removing the sulfur in elemental form from the treated stream withdrawn from the post-combustion chamber.

7. Process according to any one of claims 1 to 6, said process further comprising a step consisting in introducing the treated stream withdrawn from the post-combustion chamber, optionally cooled and/or optionally partially desulfurized, into the reaction oven of a Claus unit, in addition to a charge of acidic gas and of oxidant gas feeding the burner of the Claus reaction oven.

8. Process according to any one of claims 1 to 6, said process also comprising a step consisting in introducing the treated stream withdrawn from the post-combustion chamber, optionally cooled and/or optionally partially desulfurized, into one or a series of several Claus catalytic reactors.

9. Process according to any one of claims 1 to 8, said process also comprising an additional step consisting in recycling into the combustion chamber at least part of a process stream substantially not containing any oxygen, the temperature of which is less than 300°C, preferably less than 160°C.

10. Process according to claim 9, **characterized in that** the stream at least partly recycled into the combustion chamber is the partially desulfurized, cooled treated stream, obtained after a cooling step and a step of condensation of the sulfur formed in the post-combustion stage.
